# EUROPÄISCHE PATENTSCHRIFT

(11) **EP 3 401 831 B1**
(45) Veröffentlichungstag und Bekanntmachung des Hinweises auf die Patenterteilung: **30.06.2021**
(21) Anmeldenummer: 17170625.2
(22) Anmeldetag: 11.05.2017
(51) Int. Cl.: G06F 21/86, G06F 21/60

(54) **VORRICHTUNG UND VERFAHREN ZUM ERKENNEN EINER PHYSIKALISCHEN MANIPULATION AN EINEM ELEKTRONISCHEN SICHERHEITSMODUL**
DEVICE AND METHOD FOR DETECTING A PHYSICAL MANIPULATION IN AN ELECTRONIC SECURITY MODULE
DISPOSITIF ET PROCÉDÉ DE DÉTECTION D'UNE MANIPULATION PHYSIQUE SUR UN MODULE DE SÉCURITÉ ÉLECTRONIQUE

(43) Veröffentlichungstag der Anmeldung: 14.11.2018
(73) Patentinhaber: Siemens Aktiengesellschaft, 80333 München (DE)
(72) Erfinder: Falk, Rainer, 85586 Poing (DE)

(56) Entgegenhaltungen:
- EP-A1- 2 031 537
- US-A1- 2006 225 142
- US-A1- 2016 283 937
- Noname Noname: "Version 2.0 (for trial use) Joint Interpretation Library Application of Attack Potential to Hardware Devices with Security Boxes", , 31. Dezember 2015 (2015-12-31), XP055383899, Gefunden im Internet: URL:https://www.sogis.org/documents/cc/dom ains/hardware_devices/JIL-%20Application-o f-Attack-Potential-to-Hardware-Devices-wit h-Security-Boxes-v2-0-(for_trial_use).pdf [gefunden am 2017-06-21]

## Beschreibung

Die vorliegende Erfindung betrifft eine Vorrichtung und ein Verfahren zum Erkennen einer physikalischen Manipulation an einem elektronischen Sicherheitsmodul.

Es ist oft notwendig, Sicherheitsmodule, in denen sicherheitsrelevante Daten gespeichert sind, vor physikalischen Manipulationen, beispielsweise vor einem Öffnen oder einem Anbohren eines Gehäuses des Sicherheitsmoduls, zu schützen. Solch ein Schutz kann anhand eines Tamper-Schutzes erfolgen. Dazu werden üblicherweise unterschiedliche Tamper-Sensoren verwendet, die physikalische Eigenschaften des Sicherheitsmoduls erfassen. Die Sensordaten werden durch Auswertealgorithmen analysiert, um eine Manipulation zu erkennen. Um einen höhen Schutz des Sicherheitsmoduls zu gewährleisten, werden häufig besonders präzise Sensoren und komplexe Auswertealgorithmen verwendet.

Die EP 2 031 537 A1 offenbart ein Verfahren zum Schutz eingebetteter kryptographischer Verarbeitungsschaltungen. Das Dokument "Version 2.0 (for trial use) Joint Interpretation Library Application of Attack Potential to Hardware Devices with Security Boxes" (31. Dezember 2015) offenbart zudem die Verschlüsselung von Kommunikationsdaten innerhalb eines Sicherheitsmoduls.

Vor diesem Hintergrund besteht eine Aufgabe der vorliegenden Erfindung darin, eine verbesserte Vorrichtung zum Erkennen einer physikalischen Manipulation an einem elektronischen Sicherheitsmodul bereitzustellen.

Eine weitere Aufgabe besteht darin, ein verbessertes Verfahren zum Erkennen einer physikalischen Manipulation an einem elektronischen Sicherheitsmodul bereitzustellen.

Diese Aufgaben werden durch den Gegenstand der unabhängigen Patentansprüche gelöst. Bevorzugte Ausführungsformen der Erfindung sind in den abhängigen Patentansprüchen angegeben.

Demgemäß wird eine Vorrichtung zum Erkennen einer physikalischen Manipulation an einem elektronischen Sicherheitsmodul, welches sicherheitsrelevante Daten speichert, vorgeschlagen. Die Vorrichtung umfasst eine Sensoreinrichtung zum Erzeugen von Sensordaten, die einen physikalischen Einfluss auf das Sicherheitsmodul beschreiben, und eine erste und eine zweite Überwachungseinrichtung. Die erste Überwachungseinrichtung ist dazu eingerichtet, die erzeugten Sensordaten von der Sensoreinrichtung zu empfangen und basierend auf den empfangenen Sensordaten erste Überwachungsdaten zu erzeugen, und die zweite Überwachungseinrichtung ist dazu eingerichtet, die ersten Überwachungsdaten von der ersten Überwachungseinrichtung zu empfangen, und mit Hilfe der empfangenen ersten Überwachungsdaten eine Manipulation des Sicherheitsmoduls zu erkennen. Die erste und/oder die zweite Überwachungseinrichtung wertet die ersten und/oder zweiten Überwachungsdaten mit einem neuronalen Netz aus.

Das elektronische Sicherheitsmodul ist insbesondere ein Hardware-Sicherheitsmodul (HSM), in dem sicherheitsrelevante Daten gespeichert und sicher ausgeführt werden können. Das Sicherheitsmodul kann ein Gehäuse umfassen, in dem die elektronischen Komponenten des Sicherheitsmoduls beinhaltet sind. Das Sicherheitsmodul kann ein Computer oder ein Teil eines Computers, beispielsweise ein Trusted Platform Module (TPM) sein. Es kann auch eine VPN-Box (virtuelles privates Netzwerk), eine Public-Key-Infrastruktur (PKI) zum Ausstellen von Zertifikaten, ein Hardware-Vertrauensanker, ein Chipkartencontroller oder ein Hardware-Kryptocontroller sein.

Die sicherheitsrelevanten Daten können geheime, private Daten sein, die durch nicht autorisierte Benutzer nicht abgelesen oder abgespeichert werden sollen. Beispielsweise sind diese sicherheitsrelevanten Daten Schlüssel, insbesondere kryptographische Schlüssel. Sie können durch das Sicherheitsmodul selbst erzeugt werden, oder lediglich darauf gespeichert werden.

Die physikalische Manipulation des Sicherheitsmoduls kann beispielsweise durch eine böswillige Person erfolgen, die auf die sicherheitsrelevanten Daten zugreifen möchte. Die physikalische Manipulation ist insbesondere ein Tamperangriff. Die Manipulation kann insbesondere ein Angriff auf das Sicherheitsmodul, beispielsweise durch ein Öffnen, Zerstören oder Durchbohren des Gehäuses oder einer innerhalb des Gehäuses vorgesehenen Schutzumhüllung, wie z.B. einer Vergussmasse oder einer Schutzabdeckung einer im Gehäuse angeordneten Platine, sein. Die Manipulation kann auch ein unerwünschtes Bewegen des Sicherheitsmoduls sein, beispielsweise wenn das Sicherheitsmodul gestohlen wird. Weiterhin kann z.B. ein Lichtsensor oder ein Infrarotsensor zum Erkennen von Wärmestrahlung vorgesehen sein.

Die durch die Sensoreinrichtung erzeugten Sensordaten beschreiben einen physikalischen Einfluss auf das Sicherheitsmodul, insbesondere einen Einfluss auf das Sicherheitsmodul bei einer Manipulation. Der Einfluss kann beispielsweise als eine physikalische Eigenschaft des Sicherheitsmoduls oder als eine physikalische Eigenschaft in der Nähe des Sicherheitsmoduls, insbesondere in der Gehäusenähe ausgedrückt werden. Beispiele für den physikalischen Einfluss werden im Folgenden noch näher beschrieben. Die Sensordaten können kontinuierlich oder periodisch erzeugt, bereitgestellt oder abgefragt und ausgewertet werden.

Die erste Überwachungseinrichtung bzw. erste Tamper-Überwachungseinrichtung kann insbesondere auf die Sensoreinrichtung zugreifen. Die erste Überwachungseinrichtung und die Sensoreinrichtung können hierzu kabellos oder über eine verkabelte Verbindung miteinander Daten austauschen. Dadurch kann die erste Überwachungseinrichtung insbesondere Sensordaten empfangen. Zudem kann sie beispielsweise durch Auswertealgorithmen erste Übertragungsdaten erzeugen. Die ersten Übertragungsdaten können identisch zu den Sensordaten sein. Sie können auch verarbeitete Sensordaten sein. Die erste Überwachungseinrichtung ist beispielsweise als ein Krypto-Controller realisiert.

Die von der ersten Überwachungseinrichtung erzeugten ersten Übertragungsdaten werden insbesondere an die zweite Überwachungseinrichtung übertragen. Diese Übertragung kann über eine elektrische Verbindung, z. B. eine SPI-Schnittstelle, eine I2C-Schnittstelle, eine RS232-Schnittstelle, eine USB-Schnittstelle, eine optische Schnittstelle, ein Lichtwellenleiter oder ein Kabel, die die erste Überwachungseinrichtung mit der zweiten verbinden, erfolgen. Zudem kann die Übertragung in einer Variante kabellos, beispielsweise über WLAN oder Bluetooth erfolgen.

Die zweite Übertragungseinrichtung wertet insbesondere die empfangenen Überwachungsdaten aus, um zu bestimmen, ob eine Manipulation an dem Sicherheitsmoduls vorliegt oder nicht.

Eine Manipulation an dem Sicherheitsmodul kann durch die zweite Übertragungseinrichtung erkannt werden, selbst wenn die erste Übertragungseinrichtung keine erkannt hat. Dadurch wird die Sicherheit des Sicherheitsmoduls erhöht. Zudem kann die zweite Übertragungseinrichtung auch dazu geeignet sein, eine durch die erste Übertragungseinrichtung erkannte Manipulation zu bestätigen. Dadurch kann vermieden werden, dass die erste Übertragungseinrichtung fehlerhaft eine Manipulation erkennt. Somit bietet die beschriebene Vorrichtung einen erhöhten Manipulationsschutz bzw. Tamper-Schutz.

Gemäß einer Ausführungsform ist die zweite Überwachungseinrichtung dazu eingerichtet, die erfassten Sensordaten von der Sensoreinrichtung zu empfangen und basierend auf den empfangenen Sensordaten zweite Überwachungsdaten zu erzeugen. Ferner ist die erste Überwachungseinrichtung in dieser Ausführungsform dazu eingerichtet, die zweiten Überwachungsdaten von der zweiten Überwachungseinrichtung zu empfangen, und mit Hilfe der empfangenen zweiten Überwachungsdaten eine Manipulation des Sicherheitsmoduls zu erkennen.

Insbesondere kann die zweite Überwachungseinrichtung identisch zur ersten Überwachungseinrichtung eingerichtet sein. Dadurch kann beispielsweise auch die zweite Überwachungseinrichtung basierend auf empfangenen Sensordaten zweite Überwachungsdaten erzeugen, und diese an die erste Überwachungseinrichtung übertragen, damit die erste Überwachungseinrichtung eine Manipulation erkennt.

Die erste und zweite Überwachungseinrichtung können die empfangenen Sensordaten identisch oder unterschiedlich verarbeiten, sodass identische oder unterschiedliche erste und zweite Überwachungsdaten erzeugt werden. Die beiden Überwachungseinrichtungen können diese Überwachungsdaten austauschen. Insbesondere können beide Überwachungseinrichtungen mit Hilfe der jeweils empfangenen Überwachungsdaten eine Manipulation erkennen. Die beiden Übertragungseinrichtungen können sich gegenseitig überwachen. Jede der beiden Übertragungseinrichtungen kann unabhängig von der anderen eine Manipulation erkennen und eine entsprechende Behandlung zum Schutz des Sicherheitsmoduls auslösen.

Die Sicherheit des Sicherheitsmoduls kann dadurch erhöht werden, dass eine Manipulation sowohl durch die erste, als auch durch die zweite Überwachungseinrichtung erkannt werden kann. Wird die Manipulation durch die erste oder die zweite Überwachungseinrichtung übersehen, kann sie noch durch die andere Überwachungseinrichtung erkannt werden. Dadurch kann die Sicherheit des Sicherheitsmoduls ferner erhöht werden.

Gemäß einer weiteren Ausführungsform ist die erste und/oder die zweite Überwachungseinrichtung ferner dazu eingerichtet, die sicherheitsrelevanten Daten zumindest teilweise zu löschen, wenn die erste und/oder die zweite Überwachungseinrichtung eine Manipulation erkennt.

Die sicherheitsrelevanten Daten können zumindest einer der beiden Überwachungseinrichtungen zugeordnet sein. Beispielsweise kann jeder Überwachungseinrichtung ein Teil der sicherheitsrelevanten Daten zugeordnet sein. Insbesondere sind die sicherheitsrelevanten Daten in einem Schlüsselspeicher gespeichert. Wenn eine Manipulation erkannt wird, kann die Überwachungseinrichtung ein Löschsignal zum Löschen oder Sperren der sicherheitsrelevanten Daten, oder zumindest eines Teils davon, bereitstellen. Durch das Löschen der sicherheitsrelevanten Daten bei einer Manipulation kann vermieden werden, dass die böswillige das Sicherheitsmodul manipulierende Person an die sicherheitsrelevanten Daten gelangt.

Wird eine Manipulation erkannt, können die sicherheitsrelevanten Daten auch derart verändert werden, dass gefälschte Daten anstelle der ursprünglichen sicherheitsrelevanten Daten in dem Sicherheitsmodul gespeichert werden. Die böswillige Person würde dann, ohne es zu bemerken, die gefälschten Daten erhalten.

Gemäß einer weiteren Ausführungsform ist die Sensoreinrichtung dazu eingerichtet, als den physikalischen Einfluss auf das Sicherheitsmodul zumindest eine Bewegung oder Beschleunigung des Sicherheitsmoduls, oder einen Geräuschpegel, eine Helligkeit, eine Bewegung, eine Gaszusammensetzung, eine Vibrationsfrequenz oder ein Vibrationsmuster, oder eine Temperatur innerhalb oder in Nähe des Sicherheitsmoduls zu erfassen.

Diese physikalischen Einflüsse werden insbesondere durch eine Manipulation an das Sicherheitsmodul veranlasst.

Um diese physikalischen Einflüsse zu erfassen, umfasst die Sensoreinrichtung insbesondere Sensoren. Beispielsweise kann die Bewegung des Sicherheitsmoduls durch einen Lagesensor erfasst werden, der beispielsweise eine GPS-Position des Sicherheitsmoduls oder eine Translation/Rotation des Sicherheitsmoduls erfasst. Falls das Sicherheitsmodul bei einer Manipulation beispielsweise gestohlen, gekippt oder allgemein bewegt wird, kann diese Manipulation durch die erste und/oder zweite Überwachungseinrichtung erkannt werden.

Der Geräuschpegel oder ein Geräuschmuster innerhalb oder in der Nähe des Sicherheitsmoduls kann durch einen Tonsensor bzw. einen Beschleunigungssensor, z.B. einem MEMS-Sensor, erfasst werden, der beispielsweise eine Lautstärke an dem Sicherheitsmodul misst. Falls das Sicherheitsmodul bei einer Manipulation aufgesägt, aufgebohrt oder mit Werkzeug zerstört wird, verändert sich die durch den Tonsensor erfasste Lautstärke oder das Geräuschmuster, und diese Manipulation kann durch die erste und/oder zweite Überwachungseinrichtung erkannt werden.

Die Helligkeit innerhalb oder in der Nähe des Sicherheitsmoduls kann durch einen Lichtsensor erfasst werden. Falls das Sicherheitsmodul bzw. das Gehäuse des Sicherheitsmoduls bei einer Manipulation geöffnet wird, erhöht sich die durch den Lichtsensor erfasste Helligkeit, und diese Manipulation kann durch die erste und/oder zweite Überwachungseinrichtung erkannt werden.

Die Bewegung innerhalb oder in der Nähe des Sicherheitsmoduls kann durch einen Näherungssensor, beispielsweise einen Infrarotsensor erfasst werden. Falls ein böswilliger Benutzer sich dem Sicherheitsmodul nähert, entdeckt der Näherungssensor dieses, und eine Manipulation kann durch die erste und/oder zweite Überwachungseinrichtung erkannt werden.

Die Gaszusammensetzung innerhalb oder in der Nähe des Sicherheitsmoduls kann durch einen chemischen Sensor erfasst werden. Dieser kann zum Beispiel die Gaszusammensetzung innerhalb des Sicherheitsmoduls analysieren. Bei einer plötzlichen Änderung der chemischen Zusammensetzung des Gases wird die Manipulation erkannt.

Die Vibrationsfrequenz oder ein Vibrationsmuster des Sicherheitsmoduls kann beispielsweise durch ein Bewegen oder Anbohren des Sicherheitsmoduls im Rahmen einer Manipulation verändert werden. Bei solch einer Änderung kann eine Manipulation erkannt werden. Auf gleichermaßen kann auch eine durch einen Temperatursensor erfasste Temperaturänderung eine Manipulation angeben.

Natürlich können anstelle der genannten physikalischen Sensoren beliebige Sensoren zum Erfassen von beliebigen physikalischen Einflüssen auf das Sicherheitsmodul verwendet werden. Zum Beispiel kann die Sensoreinrichtung auch eine Bohrschutzfolie umfassen.

Die Überwachungseinrichtung kann auch eine Manipulation bei einer Kombination von mehreren Ereignissen erkennen, beispielsweise wenn zuerst der eine Bewegung in der Nähe des Sicherheitsmoduls, und dann eine Bewegung des Sicherheitsmoduls erfasst wird.

Beim Erkennen der Manipulation kann insbesondere auch erkannt werden, was für eine Manipulation durchgeführt wird, insbesondere mit welchen Mitteln die böswillige Person die Manipulation durchführt. Es kann dadurch zum Beispiel eine Kategorie der Manipulation erkannt werden. Insbesondere kann die erste und/oder zweite Überwachungseinrichtung zwischen einem normalen Ausfall der anderen Überwachungseinrichtung und einer Manipulation unterscheiden, sodass die erste und/oder zweite Überwachungseinrichtung bei einem normalen Ausfall der anderen Überwachungseinrichtung die sicherheitsrelevanten Daten von dieser abspeichern kann.

Gemäß einer weiteren Ausführungsform umfasst die Sensoreinrichtung mehrere Sensoren, die jeweils einen physikalischen Einfluss auf das Sicherheitsmodul erfassen.

Beispiele für die mehreren Sensoren wurden bereits oberhalb genannt. Es ist möglich, dass mehrere Sensoren einen selben physikalischen Einfluss, beispielsweise eine Lautstärke, erfassen. Dies ist nützlich, weil selbst bei einer Fehlfunktion einer der Sensoren noch zumindest ein weiterer Sensor denselben physikalischen Einfluss erfassen kann, und eine Manipulation dadurch nicht übersehen wird.

Außerdem können die Sensoren derart voneinander örtlich getrennt in dem Sicherheitsmodul angeordnet sein, dass auch eine Manipulation erkannt werden kann, die nur an einer Seite des Sicherheitsmoduls erfolgt.

Die Sensoren können auch unterschiedliche Einflüsse erfassen. Zumindest ein Teil der Sensoren kann der ersten oder zweiten Überwachungseinrichtung zugewiesen sein, sodass jede der Überwachungseinrichtungen ihre eigenen zugeordneten Sensoren hat.

Gemäß einer weiteren Ausführungsform erkennt die erste und/oder die zweite Überwachungseinrichtung eine Manipulation des Sicherheitsmoduls erkennt, wenn
die jeweils andere Überwachungseinrichtung eine Manipulation des Sicherheitsmoduls erkennt; und/oder wenn
die von der jeweils anderen Überwachungseinrichtung übertragenen Überwachungsdaten in einem vorbestimmten Bereich liegen, der eine physikalische Manipulation charakterisiert; und/oder wenn
ein Vergleich der ersten und zweiten Überwachungsdaten durch die erste und/oder zweite Überwachungseinrichtung ergibt, dass diese nicht miteinander übereinstimmen oder inkonsistent sind; und/oder wenn
die von der anderen Überwachungseinrichtung übertragenen Überwachungsdaten fehlerhaft sind.

Wenn die eine Überwachungseinrichtung eine Manipulation erkennt oder meldet, kann auch die andere Überwachungseinrichtung diese erkennen. Insbesondere kann die Überwachungseinrichtung, die eine Manipulation erkennt, dieses der anderen Überwachungseinrichtung mitteilen. Dadurch kann jede der beiden Überwachungseinrichtungen die Manipulation erkennen, und eine entsprechende Behandlung zum Schutz des Sicherheitsmoduls auslösen.

Ferner kann eine Manipulation durch eine der Überwachungseinrichtungen erkannt werden, wenn die von der anderen Überwachungseinrichtung übertragenen Überwachungsdaten in einem vorbestimmten Bereich liegen, der eine physikalische Manipulation charakterisiert. Grenzwerte dieses Bereichs können insbesondere im Voraus in der ersten und/oder zweiten Überwachungseinrichtung gespeichert sein. Falls die empfangenen Überwachungsdaten außerhalb des vorbestimmten Bereichs liegen, bestimmt die erste und/oder zweite Überwachungseinrichtung, dass gerade keine Manipulation stattfindet. Dieses kann auch als ein Schwellenwertvergleich betrachtet werden.

Ferner kann eine Manipulation durch eine der Überwachungseinrichtungen erkannt werden, wenn ein Vergleich der ersten und zweiten Überwachungsdaten durch die erste und/oder zweite Überwachungseinrichtung ergibt, dass diese nicht miteinander übereinstimmen oder inkonsistent sind. Insbesondere überprüft die erste und/oder zweite Überwachungseinrichtung, ob die Abweichung der eigenen Überwachungsdaten von den Überwachungsdaten der anderen Überwachungseinrichtung oberhalb einer zulässigen Abweichung liegt.

Falls die ersten und zweiten Überwachungsdaten basierend auf denselben Sensordaten bzw. basierend auf unabhängig erfassten Sensordaten, die auf einem gemeinsamen physikalischen Effekt basieren, erzeugt werden, kann erwartet werden, dass diese identisch oder zumindest konsistent sind. Ist dieses nicht der Fall, beispielsweise wenn die eine Überwachungseinrichtung durch die böswillige Person manipuliert wurde, kann die Manipulation durch die andere Überwachungseinrichtung erkannt werden.

Auch wenn der ersten und zweiten Überwachungseinrichtung jeweils Sensoren zugeordnet werden, die denselben physikalischen Einfluss erfassen, wird erwartet, dass die ersten und zweiten Überwachungsdaten identisch oder zumindest konsistent sind. Ist dieses nicht der Fall, beispielsweise wenn der eine Sensor durch die böswillige Person manipuliert/zerstört wurde, kann die Manipulation durch die andere Überwachungseinrichtung erkannt werden. Dadurch, dass die erste und/oder zweite Überwachungseinrichtung die ersten und zweiten Überwachungsdaten auf Konsistenz prüft, muss die böswillige Person auf aufwendiger Weise synchronisiert die beiden Sensoren zerstören/manipulieren, damit keine Manipulation erkannt wird. Dadurch kann die Sicherheit des Sicherheitsmoduls erhöht werden.

Ferner kann eine Manipulation durch eine der Überwachungseinrichtungen erkannt werden, wenn die von der anderen Überwachungseinrichtung übertragenen Überwachungsdaten fehlerhaft bzw. plausibel sind. Fehlerhafte Überwachungsdaten sind insbesondere Überwachungsdaten mit einem ungültigen Format, oder die aufgrund ihres Werts unplausibel scheinen. Bei kryptographisch geschützten Überwachungsdaten kann auch eine ungültige kryptographische Prüfsumme fehlerhafte Überwachungsdaten angeben.

Gemäß einer weiteren Ausführungsform ist die erste und/oder zweite Überwachungseinrichtung ferner dazu eingerichtet, regelmäßig von der anderen Überwachungseinrichtung gesendete Überwachungsdaten zu empfangen, und eine Manipulation des Sicherheitsmoduls zu erkennen, wenn die erste und/oder zweite Überwachungseinrichtung zu einem Zeitpunkt oder während eines Zeitraums, zu dem bzw. innerhalb dem sie die von der anderen Überwachungseinrichtung gesendete Überwachungsdaten empfangen sollte, die Überwachungsdaten der anderen Überwachungseinrichtung nicht empfängt.

Ein regelmäßiges Versenden von Überwachungsdaten bedeutet hier insbesondere, dass die Überwachungsdaten in regulären Intervallen, beispielsweise jede Sekunde, versendet werden. Insbesondere werden auch die Sensordaten regelmäßig erzeugt. Es kann insbesondere eine gegenseitige Überwachung, ob die jeweils andere Überwachungseinrichtung noch aktiv ist, erfolgen. Die Manipulation kann erkannt werden, wenn die erwarteten

Überwachungsdaten der anderen Überwachungseinrichtung ausbleiben.

Damit die Manipulation weder durch die erste noch durch die zweite Überwachungseinrichtung erkannt wird, muss die böswillige Person synchronisiert die erste und/oder zweite Überwachungseinrichtung zerstören/manipulieren, welches äußerst aufwendig ist. Insbesondere ist es nicht möglich, nur eine der Überwachungseinrichtungen zu manipulieren. Dadurch ist der Aufwand für eine erfolgreiche Manipulation bei zwei Überwachungseinrichtungen nicht nur doppelt so groß wie bei einer einzigen, sondern sogar noch höher, weil die beiden unabhängigen Überwachungseinrichtungen konsistent und zeitgleich manipuliert werden müssen. Somit kann gemäß dieser Ausführungsform die Sicherheit des Sicherheitsmoduls ferner erhöht werden.

Gemäß einer weiteren Ausführungsform bestehen die sicherheitsrelevanten Daten zumindest aus einem ersten und einem zweiten Schlüsselteil, die auf einzigartiger Weise ein Schlüsselpaar bilden, wobei die erste und/oder die zweite Überwachungseinrichtung den ersten und/oder zweiten Schlüsselteil löscht, wenn die erste und/oder die zweite Überwachungseinrichtung eine Manipulation des Sicherheitsmoduls erkennt.

Die sicherheitsrelevanten Daten können aus mehreren zusammengehörigen Teilen gebildet sein. Beispielsweise sind diese Teile zwei Schlüsselteile, die ein Schlüsselpaar, insbesondere ein kryptographisches Schlüsselpaar, bilden. Wird eine Manipulation erkannt, so kann zumindest ein Schlüsselteil gelöscht werden. Es ist insbesondere ausreichend, nur einen Schlüsselteil zu löschen, weil der andere Schlüsselteil nicht ohne den dazugehörenden Schlüsselteil verwendet werden kann. Selbst wenn nur eine der Überwachungseinrichtungen die Manipulation erkennt, kann kein benutzbarer Schlüssel durch die böswillige Person erhalten werden.

Gemäß einer weiteren Ausführungsform ist die erste und/oder die zweite Überwachungseinrichtung dazu eingerichtet, die ersten und/oder zweiten Überwachungsdaten kryptografisch verschlüsselt zu übertragen und/oder zu speichern. Insbesondere werden die Überwachungsdaten durch eine kryptographische Prüfsumme, beispielsweise durch einen Nachrichtenauthentifizierungscode oder einer digitalen Signatur, geschützt. Die beiden Überwachungseinrichtungen können einen gemeinsamen Schlüssel verwenden oder sie können jeweils einen Teil eines Schlüsselpaars, insbesondere einen öffentlichen oder einen privaten Schlüsselteil, aufweisen.

Gemäß einer weiteren Ausführungsform ist die erste und/oder die zweite Überwachungseinrichtung dazu eingerichtet, ein Warnsignal auszugeben, wenn sie eine Manipulation des Sicherheitsmoduls erkennt. Das Warnsignal kann zum Beispiel an eine vertrauenswürdige Person übermittelt werden. Es kann auch extern einen Alarm auslösen. Dadurch kann das Sicherheitsmodul zusätzlich geschützt werden, und Manipulationen auf andere Sicherheitsmodule können verhindert werden.

Gemäß einer weiteren Ausführungsform wertet die erste und/oder die zweite Überwachungseinrichtung die ersten und/oder zweiten Überwachungsdaten durch Mustererkennung, Schwellenwertvergleich und/oder mit einem neuronalen Netz aus, um eine physikalische Manipulation zu erkennen.

Insbesondere können Mustererkennungsdaten und Schwellenwertdaten im Voraus in einem Speicher des Sicherheitsmoduls, beispielsweise in einem RAM, gespeichert sein. Mit der Mustererkennung kann die erste und/oder zweite Überwachungseinrichtung insbesondere erkennen, ob die ersten und/oder zweiten Überwachungsdaten eine Ähnlichkeit mit manipulationstypischen Daten bzw. Mustererkennungsdaten aufweist.

Bei dem Schwellenwertvergleich werden die Überwachungsdaten mit vorgespeicherten Schwellenwertdaten verglichen, die eine Manipulation angeben. Mit dem neuronalen Netz kann die Überwachungseinrichtung andauernd dazulernen, insbesondere neue Überwachungsdatenabfolgen erkennen, die manipulationstypisch sind. Durch Auswerten der Überwachungsdaten durch Mustererkennung, Schwellenwertvergleich und/oder mit einem neuronalen Netz können die Überwachungseinrichtungen die Manipulation auf zuverlässiger Weise erkennen.

Gemäß einer weiteren Ausführungsform sind die erste und die zweite Überwachungseinrichtung in einem gleichen physikalischen Bereich des Sicherheitsmoduls vorgesehen. Insbesondere sind die erste und die zweite Überwachungseinrichtung in einem selben Gehäuse bzw. innerhalb einer gemeinsamen Umhüllung einer in dem Gehäuse angeordneten elektronischen Baugruppe vorgesehen.

Gemäß einer weiteren Ausführungsform sind die erste und die zweite Überwachungseinrichtung in physikalisch voneinander getrennten Bereichen des Sicherheitsmoduls vorgesehen. Insbesondere weist das Sicherheitsmodul mindestens zwei unterschiedliche Bereiche auf. Beispielsweise kann das Sicherheitsmodul einen inneren und einen äußeren Bereich mit jeweils einem Sicherheitsmodul aufweisen. Dadurch können beide Bereiche geschützt sein. In jedem der Bereiche kann ein Teil der sicherheitsrelevanten Daten gespeichert sein, sodass jeder Bereich einen Sicherheitsmodulteil bildet. Wenn ein Angreifer ein Sicherheitsmodulteil erfolgreich angreift bzw. manipuliert, kann das andere Sicherheitsmodulteil seinen Teil der sicherheitsrelevanten Daten löschen, sodass der Angreifer nicht den ganzen Satz an sicherheitsrelevanten Daten erhält. Weiterhin kann das im inneren Bereich angeordnete Sicherheitsmodul Sensordaten auswerten, die von Sensoren erfasst werden, die im inneren Bereich des Sicherheitsmoduls angeordnet sind. Entsprechend kann das im äußeren Bereich angeordnete Sicherheitsmodul Sensordaten auswerten, die von Sensoren erfasst werden, die im äußeren Bereich des Sicherheitsmoduls angeordnet sind.

Gemäß einer weiteren Ausführungsform ist die erste oder die zweite Überwachungseinrichtung fest mit dem Sicherheitsmodul integriert, während die andere Überwachungseinrichtung aus oder von dem Sicherheitsmodul entfernbar ist. Die entfernbare Überwachungseinrichtung kann zum Beispiel intern oder extern an das Sicherheitsmodul gesteckt werden.

Gemäß einer weiteren Ausführungsform ist zumindest eine dritte Überwachungseinrichtung vorgesehen. Die dritte Überwachungseinrichtung hat insbesondere dieselben Funktionen wie die erste und zweite Überwachungseinrichtung. Dadurch können sich beliebig viele Überwachungseinrichtungen gegenseitig überwachen. Beispielsweise kann jede Überwachungseinrichtung jede der anderen Überwachungseinrichtungen überwachen, oder die Überwachungseinrichtungen können sich jeweils paarweise überwachen.

Gemäß einer weiteren Ausführungsform wird ein Verfahren zum Erkennen einer physikalischen Manipulation an einem elektronischen Sicherheitsmodul, welches sicherheitsrelevante Daten speichert, bereitgestellt. Das Verfahren umfasst:
Erzeugen von Sensordaten, die einen physikalischen Einfluss auf das Sicherheitsmodul beschreiben;
in einer ersten Überwachungseinrichtung, Empfangen der erzeugten Sensordaten und Erzeugen erster Überwachungsdaten basierend auf den empfangenen Sensordaten; und
in einer zweiten Überwachungseinrichtung, Empfangen der ersten Überwachungsdaten und Erkennen einer Manipulation des Sicherheitsmoduls mit Hilfe der empfangenen ersten Überwachungsdaten.

Gemäß einer weiteren Ausführungsform wird das Verfahren mit der oberhalb und unterhalb beschriebenen Vorrichtung durchgeführt.

Die für die vorgeschlagene Vorrichtung beschriebenen Ausführungsformen und Merkmale gelten für das vorgeschlagene Verfahren entsprechend.

Weitere mögliche Implementierungen umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte sind Gegenstand der Unteransprüche sowie der im Folgenden beschriebenen Ausführungsbeispiele. Im Weiteren werden bevorzugten Ausführungsformen unter Bezugnahme auf die beigelegten Figuren näher erläutert.
- Fig. 1: zeigt eine Vorrichtung zum Erkennen einer physikalischen Manipulation an einem elektronischen Sicherheitsmodul gemäß einer ersten Ausführungsform;
- Fig. 2: zeigt eine Vorrichtung zum Erkennen einer physikalischen Manipulation an einem elektronischen Sicherheitsmodul gemäß einer zweiten Ausführungsform;
- Fig. 3: zeigt ein Verfahren zum Erkennen einer physikalischen Manipulation an einem elektronischen Sicherheitsmodul gemäß einer ersten Ausführungsform;
- Fig. 4: zeigt ein Verfahren zum Erkennen einer physikalischen Manipulation an einem elektronischen Sicherheitsmodul gemäß einer zweiten Ausführungsform;
- Fig. 5: zeigt ein detailliertes Verfahren zum Erkennen einer physikalischen Manipulation an einem elektronischen Sicherheitsmodul gemäß der zweiten Ausführungsform; und
- Fig. 6: zeigt ein Verfahren zum Erkennen einer physikalischen Manipulation an einem elektronischen Sicherheitsmodul gemäß einer dritten Ausführungsform.

In den Figuren sind gleiche oder funktionsgleiche Elemente mit denselben Bezugszeichen versehen worden, sofern nichts anderes angegeben ist.

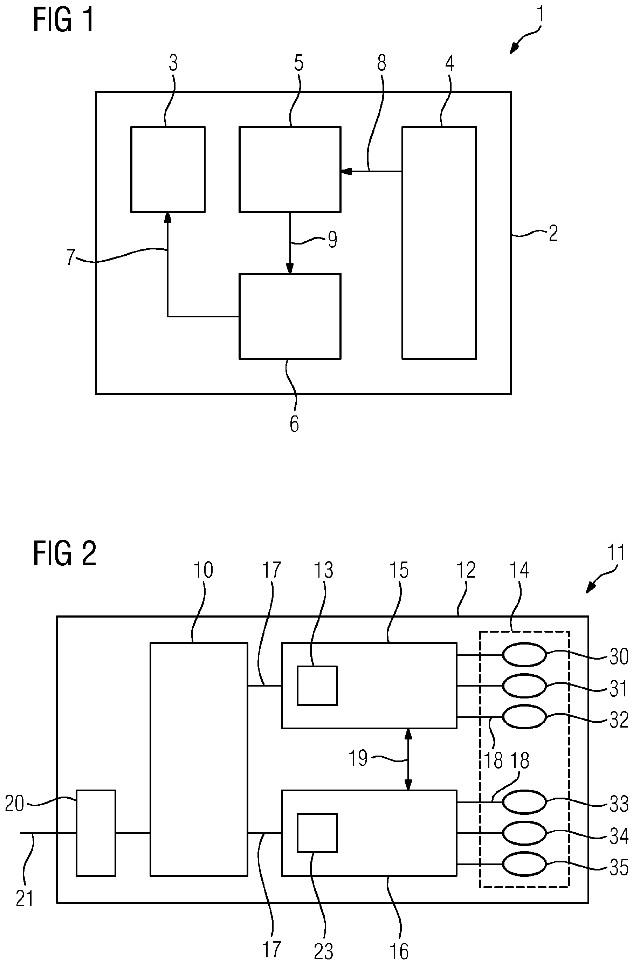

Die Fig. 1 zeigt eine Vorrichtung 1 zum Erkennen einer physikalischen Manipulation an einem elektronischen Sicherheitsmodul 2 gemäß einer ersten Ausführungsform. Das Sicherheitsmodul 2 ist hier ein Hardware-Sicherheitsmodul (HSM), welches einen Speicher 3, eine Sensoreinrichtung 4, sowie eine erste und eine zweite Überwachungseinrichtung 5, 6 aufweist. Die einzelnen elektronischen Komponenten des HSMs 2 sind hier in einem nicht dargestellten Gehäuse des HSMs 2 gespeichert.

In dem Speicher 3, welcher hier ein Flash-Speicher ist, sind sicherheitsrelevanten Daten gespeichert, auf die eine böswillige Person keinen Zugang erlangen soll. Die sicherheitsrelevanten Daten umfassen hier insbesondere einen kryptographischen Schlüssel. Sicherheitsrelevante Daten können jedoch auch in einem RAM-basierten Speicherbaustein, z.B. einem batteriegepufferten SRAM-Speicher oder in Registern gespeichert sein.

Die Sensoreinrichtung 4 erfasst in der vorliegenden Ausführungsform Bewegungen innerhalb des HSM-Gehäuses als einen physikalischen Einfluss auf das HSM 2. Hierzu ist die Sensoreinrichtung 4 als ein Bewegungssensor ausgestaltet. Bewegungen bzw. Schwingungen oder Erschütterungen innerhalb des HSM-Gehäuses werden insbesondere erfasst, wenn eine böswillige Person probiert, das HSM 2 zu manipulieren. Der Bewegungssensor 4 erfasst kontinuierlich Sensordaten, die angeben, ob Bewegungen innerhalb des HSM-Gehäuses vorliegen oder nicht, und welches Ausmaß diese Bewegungen haben.

Die beiden Überwachungseinrichtungen 5, 6 sind jeweils Steuereinheiten, die fest in dem HSM 2 angebracht sind.

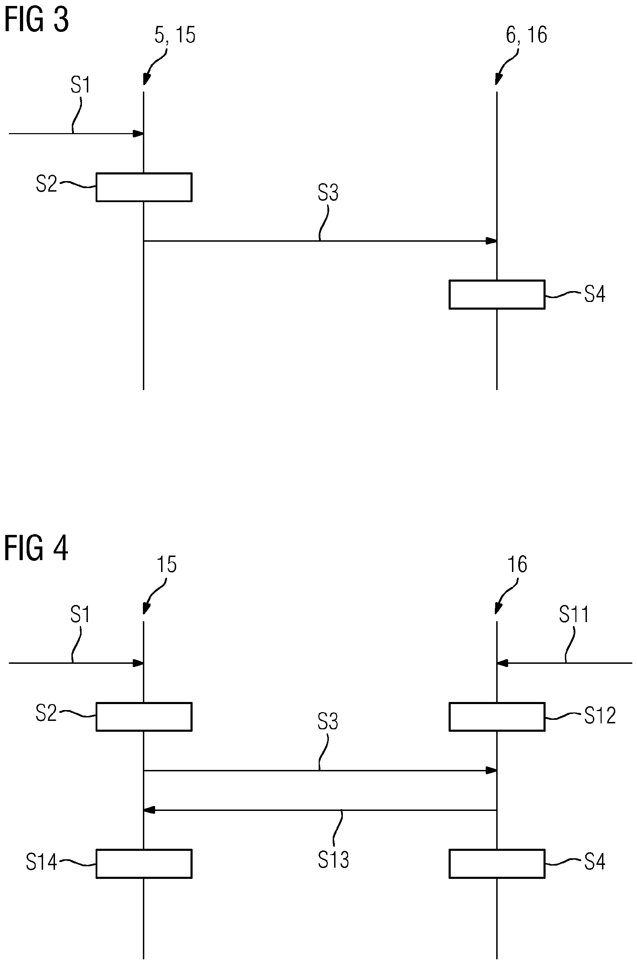

Die Vorrichtung 1 der Fig. 1 ist dazu eingerichtet, ein Verfahren zum Erkennen einer Manipulation an dem HSM 2 durchzuführen. Solch ein Verfahren wird mit Hilfe der Fig. 3 beschrieben.

In einem Schritt S1 empfängt die erste Überwachungseinrichtung 5 Sensordaten von der Sensoreinrichtung bzw. von dem Bewegungssensor 4. Die Übertragung der Sensordaten von dem Bewegungssensor 4 zur ersten Überwachungseinrichtung 5 erfolgt über ein Kabel 8.

In einem Schritt S2 erzeugt die erste Überwachungseinrichtung 5 erste Überwachungsdaten basierend auf den empfangenen Sensordaten. Hierzu bearbeitet die erste Überwachungseinrichtung 5 die empfangenen Sensordaten durch ein Auswertealgorithmus und erzeugt somit erste Überwachungsdaten. Zum Beispiel werden anhand der empfangenen Bewegungssensordaten Bewegungsänderungen als erste Überwachungsdaten ausgewertet.

Fakultativ kann die erste Überwachungseinrichtung 5 zudem überprüfen, ob die empfangenen Sensordaten oder die erzeugten ersten Überwachungsdaten Fehler aufweisen und/oder manipulationstypisch sind, und gegebenenfalls erkennen, dass eine Manipulation des HSM 2 vorliegt.

In einem Schritt S3 übersendet die erste Überwachungseinrichtung 5 die ersten Überwachungsdaten an die zweite Überwachungseinrichtung 6, welche diese empfängt. Die Übertragung der ersten Überwachungsdaten ist eine kabellose Übertragung, welche in der Fig. 1 durch einen Pfeil 9 dargestellt ist.

In einem Schritt S4 erkennt die zweite Überwachungseinrichtung 6, mit Hilfe der empfangenen ersten Überwachungsdaten, ob eine Manipulation des HSMs 2 vorliegt. Hierzu vergleicht die zweite Überwachungseinrichtung 6 die empfangenen ersten Überwachungsdaten mit einem vorgespeicherten Schwellenwert. Liegen die empfangenen ersten Überwachungsdaten über dem vorgespeicherten Schwellenwert wird bestimmt, dass die durch den Bewegungssensor 4 erfasste Bewegung aufgrund einer Manipulation an das HSM 2 vorliegt.

Falls die zweite Überwachungseinrichtung 6 eine Manipulation bzw. einen Tamper-Angriff auf das HSM 2 erkennt, kann die zweite Überwachungseinrichtung 6 zur Sicherheit des HSM 2 den in dem Speicher 3 gespeicherten Schlüssel löschen. Hierzu sendet die zweite Überwachungseinrichtung 6 über einen internen Bus 7 einen Löschbefehl an den Speicher 3, welcher das Löschen des Schlüssels durchführt.

Wird keine Manipulation durch die zweite Überwachungseinrichtung 6 erkannt, werden die beschriebenen Schritte S1 bis S4 wiederholt.

Die Fig. 2 zeigt eine Vorrichtung 11 zum Erkennen einer physikalischen Manipulation an einem elektronischen Sicherheitsmodul 12 gemäß einer zweiten Ausführungsform. Das Sicherheitsmodul 12 ist auch hier ein Hardware-Sicherheitsmodul (HSM), welches eine Sensoreinrichtung 14, eine erste Überwachungseinrichtung 15, eine zweite Überwachungseinrichtung 16, eine Steuereinheit 10, und eine Schnittstelle 20 aufweist.

Die Vorrichtung 11 der zweiten Ausführungsform unterscheidet sich hauptsächlich von der Vorrichtung 1 der ersten Ausführungsform dadurch, dass beide Überwachungseinrichtungen 15, 16 Überwachungsdaten austauschen und auswerten können. Nämlich sind die Überwachungseinrichtungen 15, 16 auf gleichermaßen dazu geeignet, Sensordaten zu empfangen, diese zum Erzeugen von Überwachungsdaten zu verarbeiten, Überwachungsdaten von der anderen Überwachungseinrichtung zu empfangen, und eine Manipulation zu erkennen. Elemente und Eigenschaften, die identisch zu denen der ersten Ausführungsform sind, werden nicht nochmal beschrieben.

Wie in der Fig. 2 gezeigt umfasst die gestrichelt dargestellte Sensoreinrichtung 14 eine Vielzahl an Sensoren 30 - 35. Die Sensoren 30 - 32 sind der ersten Überwachungseinrichtung 15 zugeordnet. Eine Verbindung zwischen den jeweiligen Sensoren 30 - 32 und der ersten Überwachungseinrichtung 15 erfolgt über die Kabel 18, wobei in der Fig. 2 nur ein einziges Kabel mit dem Bezugszeichen versehen ist.

Die Sensoren 33 - 35 sind der zweiten Überwachungseinrichtung 16 zugeordnet. Eine Verbindung zwischen den jeweiligen Sensoren 33 - 35 und der zweiten Überwachungseinrichtung 16 erfolgt über die Kabel 18, wobei in der Fig. 2 nur ein einziges Kabel mit dem Bezugszeichen versehen ist.

In der vorliegenden Ausführungsform kann die erste Überwachungseinrichtung 15 nicht auf die Sensoren 33 - 35 zugreifen, und die zweite Überwachungseinrichtung 16 kann nicht auf die Sensoren 30 - 32 zugreifen.

Die Sensoren 30 und 33 sind GPS-Sensoren, die einen identischen physikalischen Einfluss, nämlich eine GPS-Position des HSMs 12, erfassen. Die Sensoren 31 und 34 sind Temperatursensoren, die einen weiteren identischen physikalischen Einfluss, nämlich eine Temperatur innerhalb des HSMs 12, erfassen. Der Sensor 32 ist ein Lichtsensor, der eine Lichthelligkeit innerhalb des HSMs 12 als einen weiteren physikalischen Einfluss erfasst. Schließlich ist der Sensor 35 ein Bewegungssensor wie der Bewegungssensor 4 aus der ersten Ausführungsform.

Die Sensoren 30 - 35 übertragen die erfassten physikalischen Einflüsse an die Überwachungseinrichtungen 15, 16 als Sensordaten.

Die erste Überwachungseinrichtung 15 umfasst einen Schlüsselspeicher 13, in dem ein Schlüsselteil gespeichert ist, und die zweite Überwachungseinrichtung 16 umfasst einen weiteren Schlüsselspeicher 23, in dem ein weiterer Schlüsselteil gespeichert ist. Die beiden Schlüsselteile bilden auf einzigartiger Weise ein Schlüsselpaar als sicherheitsrelevante Daten. Die jeweiligen Schlüsselteile sind vor einer böswilligen Person zu schützen.

Hierzu kann die Vorrichtung 11 die in den Figuren 3 bis 6 dargestellten Verfahren durchführen. Das in der Fig. 4 dargestellte Verfahren entspricht einem parallelen Durchführen des Verfahrens aus der Fig. 3 in den ersten und zweiten Überwachungseinrichtungen 15, 16. Da die Schritte S1 bis S4 des Verfahrens aus der Fig. 3 identisch mit den Schritten S1 bis S4 aus der Fig. 4 sind, ergibt sich ein Durchführen des Verfahrens aus der Fig. 3 mit der Vorrichtung 11 auf selbstständiger Weise aus der folgenden Beschreibung zum Verfahren der Fig. 4.

In dem Schritt S1 empfängt die erste Überwachungseinrichtung 15 Sensordaten von den Sensoren 30 - 32. Parallel dazu empfängt die zweite Überwachungseinrichtung 16 in einem Schritt S11 Sensordaten von den Sensoren 33 - 35. Die Übertragung der Sensordaten erfolgt über die Kabel 18.

Die Überwachungseinrichtungen 15, 16 erzeugen, in den Schritten S2 und S12, jeweils erste und zweite Überwachungsdaten. Die Schritte S1 und S11 sowie S2 und S12 können gleichzeitig oder zeitlich verschoben durchgeführt werden.

Die erste Überwachungseinrichtung 15, welche Sensordaten von den Sensoren 30 - 32 empfängt, erzeugt einerseits erste Überwachungsdaten auf Basis der von dem Sensor 30 erhaltenen GPS-Position, und andererseits erste Überwachungsdaten, die die von den Sensoren 31 und 32 erhaltene Temperatur- und Lichtdaten kombinieren. Die zweite Überwachungseinrichtung 16, welche Sensordaten von den Sensoren 33 - 35 empfängt, erzeugt einerseits erste Überwachungsdaten auf Basis der von dem Sensor 33 erhaltenen GPS-Position, und andererseits erste Überwachungsdaten, die die von den Sensoren 34 und 35 erhaltene Temperatur- und Bewegungsdaten kombinieren.

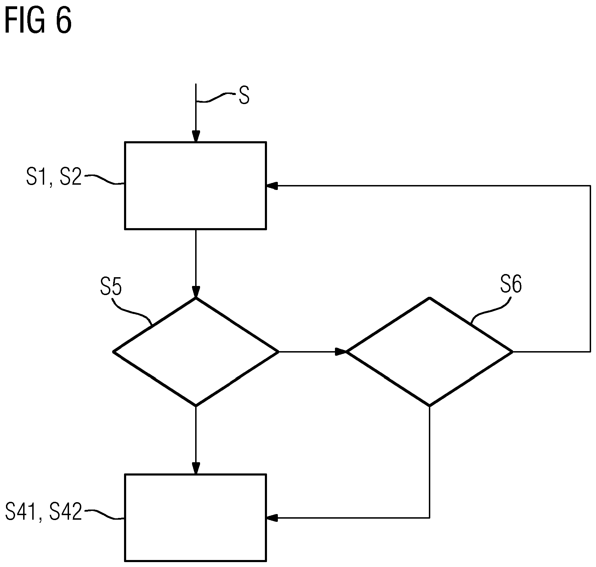

Optional überprüfen die beiden Überwachungseinrichtungen 15, 16 bereits, ob die empfangenen Sensordaten oder die erzeugten Überwachungsdaten Fehler aufweisen und/oder manipulationstypisch sind, und geben gegebenenfalls eine Warnung oder ein Löschsignal aus. Dieses wird unterhalb anhand der Fig. 6 beschrieben.

In dem Schritt S3 empfängt die zweite Überwachungseinrichtung 16 die von der ersten Überwachungseinrichtung 15 gesendeten ersten Überwachungsdaten. Zur gleichen Zeit, oder zeitlich verschoben, empfängt auch die erste Überwachungseinrichtung 15 die von der zweiten Überwachungseinrichtung 16 gesendeten zweiten Überwachungsdaten. Die Übertragung erfolgt über eine kabellose Verbindung 19. Die übertragenen Überwachungsdaten werden kryptografisch verschlüsselt ausgetauscht. Zum Verschlüsseln/Entschlüsseln der Überwachungsdaten ist in den jeweiligen Überwachungseinrichtungen ein kryptographischer Schlüssel gespeichert.

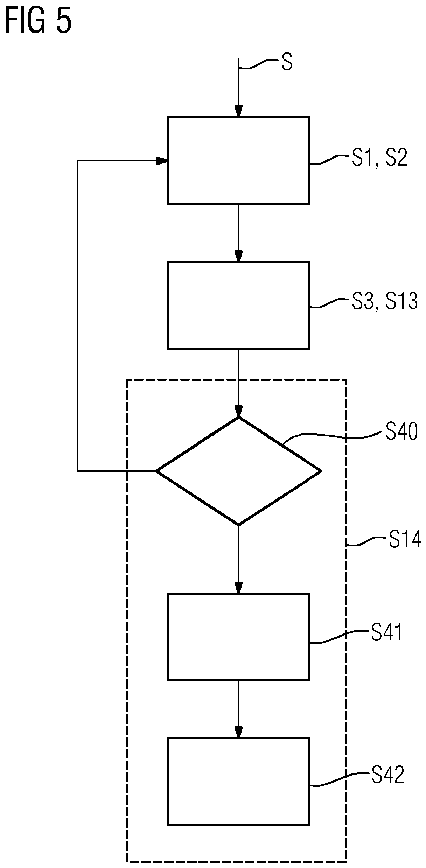

In den Schritten S4 und S14 werten die jeweiligen Überwachungseinrichtung 15, 16 die empfangenen Überwachungsdaten aus und bestimmen, ob eine Manipulation vorliegt oder nicht. Zur Bestimmung, ob eine Manipulation des HSM 12 stattfindet, können insbesondere die Werte der ersten und zweiten Überwachungsdaten in den jeweiligen Überwachungseinrichtungen verglichen. Dies ist insbesondere in der Fig. 5 gezeigt.

Die Fig. 5 stellt einen Ablauf eines Verfahrens zum Erkennen einer physikalischen Manipulation auf der Seite der zweiten Überwachungseinrichtung 16 dar. Ein Verfahren zum Erkennen einer physikalischen Manipulation auf der Seite der ersten Überwachungseinrichtung 15 wäre identisch.

Der Anfang des in der Fig. 5 dargestellte Verfahren ist durch den Pfeil S angegeben. Die Schritte S1 - S3 und S13 sind identisch zu den Schritten S1 - S3 und S13 aus der Fig. 4, und werden nicht nochmal erläutert. Der Schritt S14 ist in der Fig. 5 detailliert dargestellt. In einem Schritt S40 wird geprüft, ob die von der ersten Überwachungseinrichtung 15 empfangenen ersten Überwachungsdaten mit den zweiten Überwachungsdaten übereinstimmen. In dem oberen Beispiel können beispielsweise die ersten und zweiten Überwachungsdaten, die mit Hilfe der GPS-Positionsdaten der Sensoren 30, 33 erzeugt wurden, direkt verglichen werden, weil davon auszugehen ist, dass diese konsistent sind.

Insbesondere wird überprüft, ob eine Abweichung zwischen den ersten und zweiten Überwachungsdaten oberhalb einer zulässigen Abweichung liegt. Ist dieses der Fall, so wird in dem Schritt S40 bestimmt, dass die Überwachungsdaten Konsistent sind, und dass keine Manipulation des HSMs 12 vorliegt. Das Verfahren fährt dann mit den Schritten S1 und S2 fort.

Falls in dem Schritt S40 jedoch erkannt wird, dass die Abweichung unterhalb der zulässigen Abweichung liegt, wird bestimmt, dass die Überwachungsdaten nicht konsistent sind, und dass eine Manipulation des HSMs 12 vorliegt. Das Verfahren führt dann mit Schritt S41 fort.

In dem Schritt S41 wird ein Warnsignal ausgegeben, um extern ein Alarm auszulösen. Das Warnsignal wird in der zweiten Überwachungseinrichtung 15 erzeugt und über einen internen Bus 17 an die Steuereinheit 10 übertragen. Diese realisiert, zusammen mit der Schnittstelle 20, die Verbindung nach Außerhalb des HSMs 12, beispielsweise über eine Ethernetverbindung 21. Wenn das Warnsignal extern empfangen wird, kann gegen die Manipulation vorgegangen werden. Beispielsweise kann Sicherheitspersonal vor Ort zur Kontrolle geschickt werden, oder ein Service-Techniker beauftragt werden, das Sicherheitsmodul zu inspizieren. Weiterhin kann eine Steuerungsfunktion eines Steuerungssystems, welche das Sicherheitsmodul verwenden, deaktiviert werden oder in einen eigensicheren Betriebsmodus (fail-safe) versetzt werden. So kann ein Steuergerät einen speziellen Betriebsmodus aktivieren, wenn eine Manipulation an einem dem Steuergerät bzw. der Steuerungsfunktionalität zugeordnetem Sicherheitsmodul erkannt wird. Ein Anwendungsbeispiel ist ein Roboter, der entfernt von einer Steuerungsfunktion angesteuert wird, die auf einem entfernten Rechensystem realisiert ist. Beispielsweise kann die Steuerungsfunktion als Dienst auf einer Cloud-basierten Infrastruktur realisiert sein (cloud robotics). Die Kommunikation zur Übertragung von Steuerdaten zwischen Roboter und Steuerungsfunktion ist kryptographisch geschützt, z.B. mittels eines IPsec- oder TLS-Protokolls. Zum Aufbau der kryptographisch geschützten Kommunikationsverbindung verwendeten kryptographischen Schlüssel sind auf einem dem Roboter zugeordneten Sicherheitsmodul gespeichert. Wenn dieses Sicherheitsmodul eine Manipulation erkennt, kann es ein Warnsignal an den Roboter bereitstellen, das z.B. von einer Antriebssteuereinheit bzw. Stromrichter des Roboters ausgewertet wird, sodass der Roboter bei einem bereitgestellten Warnsignal anhält (Nothalt).

In einem Schritt S42 wird ein Löschsignal zum Löschen des in dem Schlüsselspeicher 23 gespeicherte Schlüsselteils, der der zweiten Überwachungseinrichtung 16 zugeordnet ist, erzeugt. Daraufhin wird der Schlüsselteil gelöscht.

Die Schritte S41 und S42 sind fakultativ und können auch in einer anderen Reihenfolge durchgeführt werden. Ferner kann die zweite Überwachungseinrichtung 16 bei Erkennen der Manipulation ein Signal an die erste Überwachungseinrichtung 15 senden, um diese von der Manipulation zu informieren.

Die zweite Übertragungseinrichtung 16 kann auch eine Manipulation erkennen, wenn die in dem Schritt S3 erwarteten ersten Übertragungsdaten nicht empfangen werden. Auch in diesem Fall können darauffolgend die Schritte S41 und S42 durchgeführt werden.

Die Fig. 6 zeigt ein Verfahren zum Erkennen einer physikalischen Manipulation an einem elektronischen Sicherheitsmodul gemäß einer dritten Ausführungsform, welches beispielsweise mit der in Fig. 2 gezeigten Vorrichtung 12 durchgeführt werden kann. Das Verfahren aus der Fig. 6 kann ein Teil der in den Figuren 4 und 5 dargestellten Verfahren sein, oder kann unabhängig davon durchgeführt werden. Die Fig. 6 stellt einen Ablauf eines Verfahrens zum Erkennen einer physikalischen Manipulation auf der Seite der zweiten Überwachungseinrichtung 16 dar. Ein Verfahren zum Erkennen einer physikalischen Manipulation auf der Seite der ersten Überwachungseinrichtung 15 wäre identisch.

Der Anfang des in der Fig. 6 dargestellte Verfahren ist durch den Pfeil S angegeben. Die Schritte S1 und S2 sind identisch zu den Schritten S1 und S2 aus den Figuren 3 - 5 und werden nicht nochmal erläutert.

In einem darauffolgenden Schritt S5 bestimmt die zweite Überwachungseinrichtung 16, ob die von den Sensoren 33 - 35 empfangenen Sensordaten oder die erzeugten zweiten Überwachungsdaten manipulationstypisch sind, also eine Manipulation angeben. Dies kann mit Hilfe eines angelernten neuronalen Netzes erfolgen. Somit wird in dem Schritt S5 bestimmt, ob eine Manipulation des HSMs 12 vorliegt. Wenn ja, wird das Verfahren mit den Schritten S41, S42 fortgeführt, welche bereits oben beschreiben wurden.

Wird allerding in dem Schritt S5 bestimmt, dass keine Manipulation vorliegt, so wird das Verfahren mit einem Schritt S6 weitergeführt, in dem eine Anfrage an die erste Überwachungseinrichtung 15 gesendet wird, beispielsweise über die kabellose Verbindung 19, um anzufragen, ob die erste Überwachungseinrichtung 15 eine Manipulation erkannt hat. Wenn ja, werden die Schritte S41 und/oder S42 durchgeführt. Falls in dem Schritt S6 keine Manipulation durch die erste Überwachungseinrichtung 15 erkannt wird, wird das Verfahren von neuem ab den Schritten S1 und S2 durchgeführt.

Obwohl die vorliegende Erfindung anhand von Ausführungsbeispielen beschrieben wurde, ist sie vielfältig modifizierbar. Insbesondere können beliebige Sensoreinrichtungen bzw. Sensoren zum Erfassen von beliebigen physikalischen Einflüssen verwendet werden. Zum Erzeugen der Überwachungsdaten können die Sensordaten beliebig durch die Überwachungseinrichtungen verarbeitet werden. Die Übertragung von Sensordaten, Überwachungsdaten, Warnsignalen usw. kann kabellos sowie verkabelt erfolgen. Die Auswertealgorithmen, mit denen die Überwachungseinrichtungen die Überwachungsdaten zum Entdecken der Manipulation auswerten, können beliebig modifiziert werden. Es können mehr als zwei Überwachungseinrichtungen als Teil der Vorrichtung vorgesehen sein. Die Überwachungseinrichtungen können auch in unterschiedlichen, physikalisch voneinander getrennten Bereichen des Sicherheitsmoduls vorgesehen sein.

## Patentansprüche

1. Vorrichtung (1, 11) zum Erkennen einer physikalischen Manipulation an einem elektronischen Sicherheitsmodul (2, 12), welches sicherheitsrelevante Daten speichert, umfassend:
eine Sensoreinrichtung (4, 14) zum Erzeugen von Sensordaten, die einen physikalischen Einfluss auf das Sicherheitsmodul (2, 12) beschreiben; und
eine erste und eine zweite Überwachungseinrichtung (5, 15, 6, 16), wobei
die erste Überwachungseinrichtung (5, 15) dazu eingerichtet ist, die erzeugten Sensordaten von der Sensoreinrichtung (4, 14) zu empfangen und basierend auf den empfangenen Sensordaten erste Überwachungsdaten zu erzeugen; und
die zweite Überwachungseinrichtung (6, 16) dazu eingerichtet ist, die ersten Überwachungsdaten von der ersten Überwachungseinrichtung (5, 15) zu empfangen, und mit Hilfe der empfangenen ersten Überwachungsdaten eine Manipulation des Sicherheitsmoduls (2, 12) zu erkennen, wobei die zweite Uberwachungseinrichtung (6, 16) ferner dazu eingerichtet ist, die erfassten Sensordaten von der Sensoreinrichtung (4, 14) zu empfangen und basierend auf den empfangenen Sensordaten zweite Uberwachungsdaten zu erzeugen; und die zweite Überwachungseinrichtung 6, 16) die ersten und zweiten Überwachungsdaten durch ein neuronales Netz auswertet, um eine physikalische Manipulation des Sicherheitsmoduls (2, 12) zu erkennen.

2. Vorrichtung nach Anspruch 1, wobei
die erste Überwachungseinrichtung (5, 15) ferner dazu eingerichtet ist, die zweiten Überwachungsdaten von der zweiten Überwachungseinrichtung (6, 16) zu empfangen, und mit Hilfe der empfangenen zweiten Überwachungsdaten eine Manipulation des Sicherheitsmoduls (2, 12) zu erkennen.

3. Vorrichtung nach Anspruch 1 oder 2, wobei die erste und/oder die zweite Überwachungseinrichtung (5, 15, 6, 16) ferner dazu eingerichtet ist, die sicherheitsrelevanten Daten zumindest teilweise zu löschen, wenn die erste und/oder die zweite Überwachungseinrichtung (5, 15, 6, 16) eine Manipulation erkennt.

4. Vorrichtung nach einem der Ansprüche 1 bis 3, wobei die Sensoreinrichtung (4, 14) dazu eingerichtet ist, als den physikalischen Einfluss auf das Sicherheitsmodul (2, 12) zumindest eine Bewegung oder Beschleunigung des Sicherheitsmoduls (2, 12), oder einen Geräuschpegel, eine Helligkeit, eine Bewegung, eine Gaszusammensetzung, eine Vibrationsfrequenz, oder eine Temperatur innerhalb oder in Nähe des Sicherheitsmoduls (2, 12) zu erfassen.

5. Vorrichtung nach einem der Ansprüche 1 bis 4, wobei die Sensoreinrichtung (4, 14) mehrere Sensoren (30 - 35) umfasst, die jeweils einen physikalischen Einfluss auf das Sicherheitsmodul (2, 12) erfassen.

6. Vorrichtung nach einem der Ansprüche 1 bis 5, wobei die erste und/oder die zweite Überwachungseinrichtung (5, 15, 6, 16) eine Manipulation des Sicherheitsmoduls (2, 12) erkennt, wenn
die jeweils andere Überwachungseinrichtung (5, 15, 6, 16) eine Manipulation des Sicherheitsmoduls (2, 12) erkennt;
die von der jeweils anderen Überwachungseinrichtung (5, 15, 6, 16) übertragenen Überwachungsdaten in einem vorbestimmten Bereich liegen, der eine physikalische Manipulation charakterisiert;
ein Vergleich der ersten und zweiten Überwachungsdaten durch die erste und/oder zweite Überwachungseinrichtung (5, 15, 6, 16) ergibt, dass diese nicht miteinander übereinstimmen oder inkonsistent sind; oder
die von der anderen Überwachungseinrichtung (5, 15, 6, 16) übertragenen Überwachungsdaten fehlerhaft sind.

7. Vorrichtung nach einem der Ansprüche 1 bis 6, wobei die erste und/oder zweite Überwachungseinrichtung (5, 15, 6, 16) ferner dazu eingerichtet ist, regelmäßig von der anderen Überwachungseinrichtung (5, 15, 6, 16) gesendete Überwachungsdaten zu empfangen, und eine Manipulation des Sicherheitsmoduls (2, 12) erkennt, wenn die erste und/oder zweite Überwachungseinrichtung (5, 15, 6, 16) zu einem Zeitpunkt, zu dem sie die von der anderen Überwachungseinrichtung (5, 15, 6, 16) gesendete Überwachungsdaten empfangen sollte, die Überwachungsdaten der anderen Überwachungseinrichtung (5, 15, 6, 16) nicht empfängt.

8. Vorrichtung nach einem der Ansprüche 1 bis 7, wobei die sicherheitsrelevanten Daten zumindest aus einem ersten und einem zweiten Schlüsselteil bestehen, die auf einzigartiger Weise ein Schlüsselpaar bilden, wobei die erste und/oder die zweite Überwachungseinrichtung (5, 15, 6, 16) den ersten und/oder zweiten Schlüsselteil löscht, wenn die erste und/oder die zweite Überwachungseinrichtung (5, 15, 6, 16) eine Manipulation des Sicherheitsmoduls (2, 12) erkennt.

9. Vorrichtung nach einem der Ansprüche 1 bis 8, wobei die erste und/oder die zweite Überwachungseinrichtung (5, 15, 6, 16) dazu eingerichtet ist, die ersten und/oder zweiten Überwachungsdaten kryptografisch verschlüsselt zu übertragen und/oder zu speichern.

10. Vorrichtung nach einem der Ansprüche 1 bis 9, wobei die erste und/oder die zweite Überwachungseinrichtung (5, 15, 6, 16) dazu eingerichtet ist, ein Warnsignal auszugeben, wenn sie eine Manipulation des Sicherheitsmoduls (2, 12) erkennt.

11. Vorrichtung nach einem der Ansprüche 1 bis 10, wobei die erste und/oder die zweite Überwachungseinrichtung (5, 15, 6, 16) die ersten und/oder zweiten Überwachungsdaten durch Mustererkennung und/oder mit einem Schwellenwertvergleich auswertet, um eine physikalische Manipulation des Sicherheitsmoduls (2, 12) zu erkennen.

12. Vorrichtung nach einem der Ansprüche 1 bis 11, wobei die erste und die zweite Überwachungseinrichtung (5, 15, 6, 16) in einem gleichen physikalischen Bereich des Sicherheitsmoduls (2, 12) vorgesehen sind.

13. Vorrichtung nach einem der Ansprüche 1 bis 12, wobei die erste und die zweite Überwachungseinrichtung (5, 15, 6, 16) in physikalisch voneinander getrennten Bereichen des Sicherheitsmoduls (2, 12) vorgesehen sind.

14. Verfahren zum Erkennen einer physikalischen Manipulation an einem elektronischen Sicherheitsmodul (2, 12), welches sicherheitsrelevante Daten speichert, umfassend:
Erzeugen von Sensordaten, die einen physikalischen Einfluss auf das Sicherheitsmodul (2, 12) beschreiben;
in einer ersten Überwachungseinrichtung (5, 15), Empfangen (S1) der erzeugten Sensordaten und Erzeugen (S2) erster Überwachungsdaten basierend auf den empfangenen Sensordaten; und
in einer zweiten Überwachungseinrichtung (6, 16), Empfangen (S3) der ersten Überwachungsdaten und Erkennen (S4) einer Manipulation des Sicherheitsmoduls (2, 12) mit Hilfe der empfangenen ersten Überwachungsdaten, wobei die zweite Uberwachungseinrichtung (6, 16) ferner dazu eingerichtet ist, die erfassten Sensordaten von der Sensoreinrichtung (4, 14) zu empfangen und basierend auf den empfangenen Sensordaten zweite Uberwachungsdaten zu erzeugen; und die zweite Überwachungseinrichtung (5, 15, 6, 16) die ersten und zweiten Überwachungsdaten durch ein neuronales Netz auswertet, um eine physikalische Manipulation des Sicherheitsmoduls (2, 12) zu erkennen.

15. Verfahren nach Anspruch 14, welches mit einer Vorrichtung (1) zum Erkennen einer physikalischen Manipulation an einem elektronischen Sicherheitsmodul (2, 12) nach einem der Ansprüche 1 bis 13 durchgeführt wird.

## Claims

1. Apparatus (1, 11) for detecting a physical manipulation on an electronic security module (2, 12) that stores security-relevant data, comprising:
a sensor device (4, 14) for generating sensor data that describe a physical influence on the security module (2, 12); and
a first and a second monitoring device (5, 15, 6, 16), wherein the first monitoring device (5, 15) is set up to receive the generated sensor data from the sensor device (4, 14) and to take the received sensor data as a basis for generating first monitoring data; and
the second monitoring device (6, 16) is set up to receive the first monitoring data from the first monitoring device (5, 15) and to use the received first monitoring data to detect a manipulation of the security module (2, 12),
wherein the second monitoring device (6, 16) is further set up to receive the captured sensor data from the sensor device (4, 14) and to take the received sensor data as a basis for generating second monitoring data; and
the second monitoring device (6, 16) evaluates the first and second monitoring data by means of a neural network in order to detect a physical manipulation of the security module (2, 12).

2. Apparatus according to Claim 1, wherein the first monitoring device (5, 15) is further set up to receive the second monitoring data from the second monitoring device (6, 16) and to use the received second monitoring data to detect a manipulation of the security module (2, 12).

3. Apparatus according to Claim 1 or 2, wherein the first and/or the second monitoring device (5, 15, 6, 16) is further set up to at least partially erase the security-relevant data if the first and/or the second monitoring device (5, 15, 6, 16) detects a manipulation.

4. Apparatus according to one of Claims 1 to 3, wherein the sensor device (4, 14) is set up to sense at least one movement or acceleration of the security module (2, 12), or a noise level, a brightness, a movement, a gas composition, a vibration frequency or a temperature inside or in proximity to the security module (2, 12) as the physical influence on the security module (2, 12).

5. Apparatus according to one of Claims 1 to 4, wherein the sensor device (4, 14) comprises a plurality of sensors (30 - 35) that in each case sense a physical influence on the security module (2, 12).

6. Apparatus according to one of Claims 1 to 5, wherein the first and/or the second monitoring device (5, 15, 6, 16) detects a manipulation of the security module (2, 12) if the respective other monitoring device (5, 15, 6, 16) detects a manipulation of the security module (2, 12);
the monitoring data transmitted by the respective other monitoring device (5, 15, 6, 16) are in a predetermined range that characterizes a physical manipulation;
a comparison of the first and second monitoring data by the first and/or second monitoring device (5, 15, 6, 16) reveals that said data are not concordant with one another or are inconsistent; or
the monitoring data transmitted by the other monitoring device (5, 15, 6, 16) are erroneous.

7. Apparatus according to one of Claims 1 to 6, wherein the first and/or second monitoring device (5, 15, 6, 16) is further set up to receive monitoring data regularly sent by the other monitoring device (5, 15, 6, 16) and detects a manipulation of the security module (2, 12) if the first and/or second monitoring device (5, 15, 6, 16) does not receive the monitoring data of the other monitoring device (5, 15, 6, 16) at a time at which it should receive the monitoring data sent by the other monitoring device (5, 15, 6, 16).

8. Apparatus according to one of Claims 1 to 7, wherein the security-relevant data at least consist of a first and a second key portion that form a key pair in a unique manner, wherein the first and/or the second monitoring device (5, 15, 6, 16) erases the first and/or second key portion if the first and/or the second monitoring device (5, 15, 6, 16) detects a manipulation of the security module (2, 12).

9. Apparatus according to one of Claims 1 to 8, wherein the first and/or the second monitoring device (5, 15, 6, 16) is set up to transmit the first and/or second monitoring data in cryptographically encrypted fashion and/or to store said data.

10. Apparatus according to one of Claims 1 to 9, wherein the first and/or the second monitoring device (5, 15, 6, 16) is set up to output a warning signal if it detects a manipulation of the security module (2, 12).

11. Apparatus according to one of Claims 1 to 10, wherein the first and/or the second monitoring device (5, 15, 6, 16) evaluates the first and/or second monitoring data by means of pattern recognition and/or using a threshold value comparison in order to detect a physical manipulation of the security module (2, 12).

12. Apparatus according to one of Claims 1 to 11, wherein the first and the second monitoring device (5, 15, 6, 16) are provided in the same physical area of the security module (2, 12).

13. Apparatus according to one of Claims 1 to 12, wherein the first and the second monitoring device (5, 15, 6, 16) are provided in physically separate areas of the security module (2, 12).

14. Method for detecting a physical manipulation on an electronic security module (2, 12) that stores security-relevant data, comprising:
generating sensor data that describe a physical influence on the security module (2, 12);
in a first monitoring device (5, 15), receiving (S1) the generated sensor data and generating (S2) first monitoring data based on the received sensor data; and
in a second monitoring device (6, 16), receiving (S3) the first monitoring data and detecting (S4) a manipulation of the security module (2, 12) using the received first monitoring data,
wherein the second monitoring device (6, 16) is further set up to receive the captured sensor data from the sensor device (4, 14) and to take the received sensor data as a basis for generating second monitoring data; and
the second monitoring device (5, 15, 6, 16) evaluates the first and second monitoring data by means of a neural network in order to detect a physical manipulation of the security module (2, 12).

15. Method according to Claim 14, which is performed using an apparatus (1) for detecting a physical manipulation on an electronic security module (2, 12) according to one of Claims 1 to 13.

## Revendications

1. Installation (1, 11) de détection d'une manipulation physique sur un module (2, 12) électronique de sécurité, qui met en mémoire des données pertinentes du point de vue de la sécurité, comprenant :
un dispositif (4, 14) de capteur pour la production de données de capteur, qui décrivent une influence physique sur le module (2, 12) de sécurité ; et
un premier et un deuxième dispositif (5, 15, 6, 16) de contrôle,
le premier dispositif (5, 15) de contrôle étant conçu pour recevoir les données de capteur produites du dispositif (4, 14) de capteur et pour produire des premières données de contrôle sur la base des données de capteurs reçues ;
le deuxième dispositif (6) de contrôle étant conçu pour recevoir les premières données de contrôle du premier dispositif (5, 15) de contrôle et pour, à l'aide des premières données de contrôle reçues, détecter une manipulation du module (2, 12) de sécurité,
dans laquelle le deuxième dispositif (6, 16) de contrôle est conçu en outre pour recevoir les données de capteur détectées du dispositif (4, 14) de capteur et pour produire, sur la base des données de capteur reçues, des deuxièmes données de contrôle ; et
le deuxième dispositif (6, 16) de contrôle exploite les premières et deuxièmes données de contrôle par un réseau neuronal pour détecter une manipulation physique du module (2, 12) de sécurité.

2. Installation suivant la revendication 1, dans laquelle
le premier dispositif (5, 15) de contrôle est conçu en outre pour recevoir les deuxièmes données de contrôle du deuxième dispositif (6, 16) de contrôle et pour, à l'aide des deuxièmes données de contrôle reçues, détecter une manipulation du module (2, 12) de sécurité.

3. Installation suivant les revendications 1 ou 2, dans laquelle le premier et/ou le deuxième dispositif (5, 15, 6, 16) de contrôle est conçu en outre pour effacer au moins en partie les données pertinentes du point de vue de la sécurité, si le premier et/ou le deuxième dispositif (5, 15, 6, 16) de contrôle détecte une manipulation.

4. Installation suivant l'une des revendications 1 à 3, dans laquelle le dispositif (4, 14) de capteur est conçu pour détecter comme influence physique sur le module (2, 12) de sécurité au moins un déplacement ou une accélération du module (2, 12) de sécurité ou un niveau de bruit, une luminosité, un déplacement, une composition de gaz, une fréquence de vibration, une température dans le module (2, 12) de sécurité ou à sa proximité.

5. Installation suivant l'une des revendications 1 à 4, dans laquelle le dispositif (4, 14) de capteur comprend plusieurs capteurs (30 à 35), qui détectent chacun une influence physique sur le module (2, 12) de sécurité.

6. Installation suivant l'une des revendications 1 à 5, dans laquelle le premier et/ou le deuxième dispositif (5, 15, 6, 16) de contrôle détecte une manipulation du module (2, 12) de sécurité, si
l'autre dispositif (5, 15, 6, 16) de contrôle respectif détecte une manipulation du module (2, 12) de sécurité ;
les données de contrôle, transmises par respectivement l'autre dispositif (5, 15, 6, 16) de contrôle, se trouvent dans une plage définie à l'avance, qui caractérise une manipulation physique ;
une comparaison des premières et deuxièmes données de contrôle par le premier et/ou le deuxième dispositif (5, 15, 6, 16) de contrôle donne qu'elles ne coïncident pas entre elles ou qu'elles sont inconsistantes ; ou
les données de contrôle, transmises par l'autre dispositif (5, 15, 6, 16) de contrôle, sont entachées d'erreurs.

7. Installation suivant l'une des revendications 1 à 6, dans laquelle le premier et/ou le deuxième dispositif (5, 15, 6, 16) de contrôle est conçu en outre pour recevoir régulièrement des données de contrôle envoyées par l'autre dispositif (5, 15, 6, 16) de contrôle et pour détecter une manipulation du module (2, 12) de sécurité, si le premier et/ou le deuxième dispositif (5, 15, 6, 16) de contrôle ne reçoit pas, à un instant où il devrait recevoir les données de contrôle de l'autre dispositif (5, 15, 6, 16) de contrôle, les données de contrôle de l'autre dispositif (5, 15, 6, 16) de contrôle.

8. Installation suivant l'une des revendications 1 à 7, dans laquelle les données pertinentes du point de vue de la sécurité sont constituées d'une première et d'au moins une deuxième partie de clef, qui forme d'une manière univoque une paire de clefs, le premier et/ou le deuxième dispositif (5, 15, 6, 16) de contrôle effaçant la première et/ou la deuxième partie de clef, si le premier et/ou le deuxième dispositif (5, 15, 6, 16) de contrôle détecte une manipulation du module (2, 12) de sécurité.

9. Installation suivant l'une des revendications 1 à 8, dans laquelle le premier et/ou le deuxième dispositif (5, 15, 6, 16) de contrôle est conçu pour transmettre et/ou mettre en mémoire d'une manière chiffrée cryptographiquement les premières et/ou les deuxièmes données de contrôle.

10. Installation suivant l'une des revendications 1 à 9, dans laquelle le premier et/ou le deuxième dispositif (5, 15, 6, 16) de contrôle est conçu pour émettre un signal d'alerte, s'il détecte une manipulation du module (2, 12) de sécurité.

11. Installation suivant l'une des revendications 1 à 10, dans laquelle le premier et/ou le deuxième dispositif (5, 15, 6, 16) de contrôle exploite les premières ou deuxièmes données de contrôle par reconnaissance de modèle et/ou par une reconnaissance de valeur de seuil afin de détecter une manipulation physique du module (2, 12) de sécurité.

12. Installation suivant l'une des revendications 1 à 11, dans laquelle le premier et/ou le deuxième dispositif (5, 15, 6, 16) de contrôle sont prévus dans une même partie physique du module (2, 12) de sécurité.

13. Installation suivant l'une des revendications 1 à 12, dans laquelle le premier et le deuxième dispositif (5, 15, 6, 16) de contrôle sont prévus dans des parties, séparées physiquement l'une de l'autre, du module (2, 12) de sécurité.

14. Procédé de détection d'une manipulation physique sur un module (2, 12) électronique de sécurité, lequel met en mémoire des données pertinentes du point de vue de la sécurité, comprenant :
la production de données de capteur, qui décrivent une influence physique sur le module (2, 12) de sécurité ;
dans un premier dispositif (5, 15) de contrôle, la réception (S1) des données de capteur produites et la production (S2) de premières données de contrôle, reposant sur les données de capteur reçues ; et
dans un deuxième dispositif (6, 16) de contrôle, la réception (S3) des premières données de contrôle et la détection (S4) d'une manipulation du module (2, 12) de sécurité à l'aide des premières données de contrôle reçues,
dans lequel le deuxième dispositif (6, 16) de contrôle est conçu en outre pour recevoir les données de capteur détectées du dispositif (4, 14) de capteur et pour produire, sur la base des données de capteur reçues, des deuxièmes données de contrôle ; et
le deuxième dispositif (5, 15, 6, 16) de contrôle exploite les premières et deuxièmes données de contrôle par un réseau neuronal pour détecter une manipulation physique du module (2, 12) de sécurité.

15. Procédé suivant la revendication 14, que l'on effectue par une installation (1) de détection d'une manipulation physique sur un module (2, 12) électronique de sécurité suivant l'une des revendications 1 à 13.
